# EUROPÄISCHE PATENTSCHRIFT

(11) **EP 3 069 404 B1**
(45) Veröffentlichungstag und Bekanntmachung des Hinweises auf die Patenterteilung: **07.11.2018**
(21) Anmeldenummer: 14796760.8
(22) Anmeldetag: 12.11.2014
(51) Int. Cl.: H01M 10/04, H01M 10/05, H01M 10/0583

(54) **ELEKTRODENANORDNUNG, VERFAHREN ZU IHRER HERSTELLUNG UND ELEKTROCHEMISCHE ZELLE**
ELECTRODE ASSEMBLY, METHOD FOR THE PRODUCTION THEREOF, AND ELECTROCHEMICAL CELL
ENSEMBLE D'ÉLECTRODES, PROCÉDÉ POUR SA FABRICATION ET PILE ÉLECTROCHIMIQUE

(30) Priorität: 15.11.2013 DE 102013019071
(43) Veröffentlichungstag der Anmeldung: 21.09.2016
(73) Patentinhaber: Karlsruher Institut für Technologie (KIT), 76131 Karlsruhe (DE)
(72) Erfinder: BAUMEISTER, Manuel, 76646 Bruchsal (DE); HAAG, Sebastian, 76227 Karlsruhe (DE); FLEISCHER, Jürgen, 76228 Karlsruhe (DE)
(74) Vertreter: Herzog, Fiesser & Partner Patentanwälte PartG mbB
(86) Internationale Anmeldenummer: PCT/EP2014/074322
(87) Internationale Veröffentlichungsnummer: WO 2015/071284

(56) Entgegenhaltungen:
- WO-A1-2014/159281
- DE-A1- 1 496 227
- JP-A- 2003 123 743
- JP-A- 2011 138 675

## Beschreibung

### Gebiet der Erfindung

Die vorliegende Erfindung betrifft eine Elektrodenanordnung, ein Verfahren zu ihrer Herstellung sowie eine elektrochemische Zelle, welche mindestens eine derartige Elektrodenanordnung umfasst. Darüber hinaus betrifft die vorliegende Erfindung ein Verfahren zur Herstellung der elektrochemischen Zelle sowie eine Sekundärbatterie, welche mindestens eine derartige elektrochemische Zelle umfasst.

### Stand der Technik

Aus dem Stand der Technik ist eine Vielzahl von Batterien bekannt, worunter üblicherweise eine elektrische Zusammenschaltung von mindestens zwei elektrochemischen Zellen, welche auch als galvanische Zellen bezeichnet werden, verstanden wird, welche vorzugsweise zur Speicherung chemischer Energie und zur Abgabe elektrischer Energie eingesetzt wird. Neben so bezeichneten "Primärbatterien", welche sich in Bezug auf ihren Lebenszyklus lediglich einmalig einsetzen lassen, existiert eine Vielzahl von so genannten "Sekundärbatterien", die sich über eine Vielzahl von Zyklen mit elektrischer Energie laden und entladen lassen. Hierfür ist ein Einsatz von geeigneten Aktivmaterialien erforderlich, welche sich reversibel zwischen mindestens zwei elektronischen Zuständen umwandeln lassen, um auf diese Weise chemische Energie in elektrische Energie bzw. umgekehrt umsetzen zu können.

Als "elektrochemische Zelle" wird üblicherweise eine Einrichtung benannt, welche zwei räumlich voneinander getrennte Elektroden umfasst, und zwar eine erste Elektrode und eine zweite Elektrode, die jeweils eine verschiedene Polarität aufweisen und daher auch als "Kathode" bzw. als "Anode" bezeichnet werden. In der elektrochemischen Zelle stehen die beiden Elektroden zum einen über mindestens einen ionenleitenden Elektrolyten miteinander in Kontakt, während ein für die Ionen durchlässiger Separator die beiden Elektroden elektrisch voneinander isoliert, um einen Kurzschluss zu vermeiden. Mit anderen Worten: Die elektrochemische Zelle verfügt in der Regel über eine so genannte "Elektrodenanordnung", welche auch als "Elektroden-Separator-Anordnung" bezeichnet wird und welche mindestens eine erste Elektrode, mindestens eine zweite Elektrode und mindestens einen Separator umfasst, wobei die Elektrodenanordnung wenigstens mit dem mindesten einen Elektrolyten und mit mindestens einem elektrischen Ableiter für jede der beiden Elektroden versehen ist.

Aus dem Stand der Technik ist eine Vielzahl von Elektrodenanordnungen bekannt. Die DE 10 2009 013 727 A1 beschreibt beispielsweise einen Stapel von flachen elektrochemischen Zellen, wobei jeder Stapel eine Kathodenplatte und eine Anodenplatte aufweist, die jeweils durch eine zwischenliegende Separator-Membran getrennt sind. Eine vergleichbare Anordnung ist aus der DE 10 2011 102 847 A1 bekannt.

Da der Separator in vielen Fällen in Form eines isolierenden Bandes, welches beispielsweise als Membran ausgestaltet sein kann, vorliegt, werden elektrochemische Zellen beschrieben, in welchen der Separator als isolierende Bahn in Form einer so genannten "Zickzack-Faltung" oder "Z-Faltung" gelegt ist, wobei durch die Zickzack-Faltung eine Mehrzahl von übereinander liegenden Lagen ausgebildet ist, zwischen denen jeweils abwechselnd eine Kathodenplatte und eine Anodenplatte eingefügt ist. Eine derartige Ausgestaltung der elektrochemischen Zelle findet sich beispielsweise in G. Reinhart, T. Zeilinger, J. Kurfer, M. Westermeier, C. Thiemann, M. Glonegger, M. Wunderer, C. Tammer, M. Schweier, und M. Heinz, Research and Demonstration Center for the Production of Large Area-Lithium Ion-Cells, in G. Schuh et al., Hrsg., Future Trends in Production Engineering, Springer, 2013, Proceedings of the First Conference of the German Academic Society for Production Engineering, Berlin, 2011, Seite 3-11.

Aus der EP 1 278 253 B1 ist eine weitere Elektrodenanordnung bekannt, bei welcher sowohl der Separator als auch die Anode in Form einer isolierenden bzw. elektrisch leitfähigen Bahn vorliegt, welche gemeinsam zu einer Zickzack-Faltung gelegt sind, wobei sich durch diese gemeinsame Zickzack-Faltung des Separators und der Anode eine Mehrzahl von übereinander liegenden gemeinsamen Lagen aus Separator und Anode ausbildet, wobei zwischen den gemeinsamen Lagen jeweils Kathodenplatten eingefügt sind.

Die DE 38 29 541 A1 offenbart eine Elektrodenanordnung, welche über einen Schichtaufbau aus zwei Elektroden und einem Separator verfügt, wobei jede Elektrode eine leitfähige Bahn in einer Zickzackfaltung mit einer Faltrichtung aufweist. Durch die Zickzackfaltung bildet sich jeweils eine Mehrzahl von übereinander liegenden Lagen aus, wobei die beiden Lagen parallel zueinander angeordnet sind und die beiden Faltrichtungen senkrecht zueinander stehen.

Insbesondere im Fall von Lithium-Ionenbatterien werden häufig Elektroden aus einem metallischen Material wie beispielsweise Kupfer oder Aluminium eingesetzt, auf die jeweils eine Schicht aus einem Aktivmaterial aufgebracht ist, wobei das Aktivmaterial ein Lithium-haltiges Anoden- oder Kathodenmaterial umfasst. Eine Übersicht über gebräuchliche Materialien auf dem Gebiet der Lithiumionen-Batterien findet sich in B. Ketterer, U. Karl, D. Möst, und S. Ulrich, Lithium-Ionenbatterien: Stand der Technik und Anwendungspotential in Hybrid, Plugin-Hybrid und Elektrofahrzeugen, Forschungszentrum Karlsruhe, Wissenschaftliche Berichte, FZKA 7503, Oktober 2009, Seite 7-13. Demgemäß verfügen Lithiumionen-Batterien heutzutage in der Regel über Graphit-Anoden, welche sich vor allem durch ein niedriges Elektrodenpotential und eine relativ geringe Volumenausdehnung bei der Einlagerung von Lithium-Ionen auszeichnen. Alternative Anodenmaterialien sind Titanoxide, vorzugsweise LiTiO₂ oder Li₄Ti₅O₁₂.

Wie aus B. Ketterer, s.o., weiterhin hervorgeht, umfassen bekannte Kathodenmaterialien, die als Aktivmaterialien für Lithiumionen-Batterien eingesetzt werden, in der Regel Interkalationsverbindungen aus anorganischen Übergangsmetalloxiden, welche sich gemäß der Dimensionalität einer Wirtsstruktur für eine Lithiumionendiffusion in der Interkalationsverbindung in eindimensionale Röhren-Strukturen, in zweidimensionale Schicht-Strukturen und in dreidimensionale Rahmen-Strukturen untergliedern lassen. Zu den Verbindungen mit eindimensionaler Röhren-Struktur zählen Übergangsmetallverbindungen, etwa LiFePO₄ mit Olivin-Struktur. Die zweidimensionalen Schichtstrukturen umfassen insbesondere LiMo₂ mit M = Co, Mi, Fe oder Mn, wobei insbesondere die Verbindungen LiNi_{0,85}Co_{0,1}Al_{0,05}O₂, LiNi_{1/3}Co_{1/3}Mn_{1/3}O₂ oder Li-Ni_{1/2}Mn_{1/2}O₂ eingesetzt werden. Verbindungen mit Spinell-Struktur, wie beispielsweise LiMn₂O₄, bieten ein dreidimensionales Netzwerk zur Einlagerung der Lithium-Ionen.

Die EP 0 869 570 B1 offenbart, die auf mindestens einer Seite der elektrisch leitfähigen Bahn aufgebrachte Beschichtung aus dem Aktivmaterial zumindest im Bereich der Faltkanten auszusetzen. Die dadurch entstehenden Lücken in der Beschichtung aus dem Aktivmaterial auf der elektrisch leitfähigen Bahn ermöglicht es insbesondere, die elektrisch leitfähige Bahn ohne etwaige Beschädigungen, welche sich zum Beispiel durch Ablösen von Aktivmaterial im Bereich der Faltkanten ergeben könnten, falten und legen zu können.

Die DE 1496227 A offenbart eine Elektrodenanordnung und ein Verfahren zur Herstellung der Elektrodenanordnung, in welchem die erste Elektrode in Form eines Bandes sich zwischen zwei Lagen eines Separators befindet und in einer Zickzackfaltung gefaltet ist. Die zweite Elektrode besitzt ebenfalls die Form eines Bandes und wird in Zickzackfaltung gefaltet. Beim Falten des Stapels wird die Elektrode auf sich selbst oder um eine Längsfalte des Separators gefaltet, so dass sich eine Doppellage ergibt. Auf diese folgt eine Lage der ersten Elektrode. Die Faltung wird beliebig oft wiederholt. Hierbei kann die Elektrode entweder in Form eines Bandes oder eines Kranzes aus in Reihe geschalteten Elektroden ausgebildet sein. Die leitfähigen Bänder weisen daher Faltlinien auf, die frei von Aktivmaterial sind. Darüber hinaus wird hier offenbart, dass die Elektrodenanordnung mit Elektrolyt getränkt sein kann.

Allgemein werden Elektrodenanordnungen gefordert, welche bei gleichzeitig verbesserter Sicherheit mehr Leistung bzw. Energie bei höheren Spannungen bereitstellen sollen. Im Falle von Lithiumionenbatterien weisen die bekannten Elektrodenanordnungen insbesondere aufgrund des hierbei auftretenden Ausdehnungsverhaltens der eingesetzten Materialien Nachteile auf, insbesondere da sich dort oftmals bereits nach kurzer Betriebszeit Fehlfunktionen, wie etwa ein hoher Innenwiderstand, ausbilden können. So ist etwa von Lithiumionenbatterien bekannt, dass Abscheidungen aus metallischem Lithium oder anderen Materialien wie beispielsweise Eisen in Form von baumartigen Strukturen, so genannten "Dendriten", oder auch in Form von flächigen Strukturen zu einem Kurzschluss und damit zu einem völligen Fehlversagen der Elektrodenanordnung und der elektrochemischen Zelle, in welcher sich die betroffene Elektrodenanordnung befindet, führen können. Beispielsweise können Dendriten als fein gegliederte Strukturen nadelhaft eine Elektrodenanordnung durchstoßen und auf diese Weise einen Kurzschluss herbeiführen. Alternativ und/oder zusätzlich können sich Dendriten aber auch um Faltkanten herum ausbilden, wodurch sich ebenfalls ein Kurzschluss ausbilden kann. Flächig abgeschiedenes Lithium kann darüber hinaus eine möglicherweise unerwünschte elektrisch leitfähige Verbindung von einer Elektrode zu dem Elektrolyten ausbilden. Auch auf diese Weise kann die Lebensdauer einer Batterie, welche mindestens eine derart schadhafte Elektrodenanordnung aufweist, signifikant verringert werden.

### Aufgabe der Erfindung

Die Aufgabe der vorliegenden Erfindung besteht darin, eine Elektrodenanordnung, ein Verfahren zu ihrer Herstellung und eine elektrochemische Zelle bereitzustellen, welche die aus dem Stand der Technik bekannten Nachteile und Einschränkungen zumindest teilweise überwinden.

Insbesondere soll eine Elektrodenanordnung und eine elektrochemische Zelle, die eine derartige Elektrodenanordnung umfasst, bereitgestellt werden, in welcher mögliche Veränderungen der Struktur, etwa durch die Dendritenbildung und die flächige Abscheidung aus Aktivmaterialien, möglichst weitgehend unterdrückt ist und welche sich bei dadurch verbesserter Sicherheit für den Einsatz in Sekundärbatterien mit höherer Leistung bzw. Energie eignen.

Weiterhin soll insbesondere ein Verfahren zur Herstellung der Elektrodenanordnung vorgeschlagen werden, welches eine effiziente Herstellung der Elektrodenanordnung und/oder der elektrochemischen Zelle unter einer möglichst geringen Anzahl an Verfahrensschritten erlaubt.

### Offenbarung der Erfindung

Diese Aufgabe wird gelöst durch eine Elektrodenanordnung, ein Verfahren zu ihrer Herstellung sowie durch eine elektrochemische Zelle mit den Merkmalen der unabhängigen Patentansprüche. Bevorzugte Ausgestaltungen, welche einzeln oder in Kombination realisierbar sind, sind in den abhängigen Patentansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merk-male vorhanden sind, oder auf Situationen, in welchen ein oder mehrere weitere Merkmale vorhanden sind. Beispielsweise kann sich der Ausdruck "A hat B", "A weist B auf, "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Die vorliegende Erfindung umfasst in einem ersten Aspekt eine Elektrodenanordnung, die über einen Schichtaufbau mit mindestens einer ersten Elektrode, mindestens einer zweiten Elektrode und mindestens einem zwischen der ersten Elektrode und der zweiten Elektrode eingebrachten Separator verfügt. Unter der "ersten Elektrode" wird hierbei ein erstes, elektrisch leitfähiges Material verstanden, das erfindungsgemäß in Form mindestens einer ersten elektrisch leitfähigen Bahn vorliegt. Eine analoge Anforderung gilt auch für die "zweite Elektrode", die als zweites elektrisch leitfähiges Material in Form mindestens einer elektrisch leitfähigen Bahn vorliegt. Die beiden Elektroden unterscheiden sich hierbei in Bezug auf ihre Polarität, so dass für den Fall, dass es sich bei der ersten Elektrode um eine Anode handelt, die zweite Elektrode eine Kathode darstellt. Handelt es sich umgekehrt bei der ersten Elektrode um eine Kathode, so stellt die zweite Elektrode demnach eine Anode dar. Als "Anode" wird hierbei - im Einklang mit der üblichen Definition - diejenige Elektrode bezeichnet, an welcher eine Oxidation ablaufen kann, wodurch Elektronen von der Anode über einem Ableiter abfließen können, während sich in einem Elektrolyten vorhandene Anionen zur Anode bewegen können, um insbesondere auf Zwischengitterplätzen in einem Aktivmaterial, welches die Anode umfasst, eingelagert werden zu können. Als "Kathode" wird demgegenüber diejenige Elektrode bezeichnet, an welcher eine Reduktion ablaufen kann, wodurch Elektronen über einen Ableiter zur Kathode hinfließen können, während sich in den Elektrolyten befindliche Kationen ebenfalls zur Kathode bewegen können. Solange die beiden Elektroden eine voneinander unterschiedliche Polarität aufweisen, ist es für die erfindungsgemäße Elektrodenanordnung unerheblich, welche der beiden Elektroden, d.h. die erste Elektrode oder die zweite Elektrode, tatsächlich eine Kathode oder eine Anode darstellt.

Erfindungsgemäß weist jede der beiden Elektroden jeweils eine elektrisch leitfähige Bahn auf. Hierunter ist ein flacher flexibler Körper aus einem elektrisch leitfähigen Material zu verstehen, welcher insbesondere in Form einer Rolle bereitgestellt werden kann. Durch diese Art der Formgebung wird hierbei die Dimensionen der Bahn derart festgelegt, dass die Länge der Bahn sehr viel größer ist als die Breite der Bahn, während die Breite der Bahn sehr viel größer ist als die Dicke der Bahn. Die Länge der Bahn kann hierbei die Breite der Bahn um einen Faktor 10, 100, 1000 oder mehr übertreffen, während die Breite der Bahn die Dicke der Bahn um einen Faktor 10, 20, 50, 100 oder mehr überschreiten kann. Die Bahn kann insbesondere in Form einer Metallfolie, eines dünnen Bandes, eines Streckmetalls und/oder einer gewebten Netzstruktur vorliegen, welche jeweils ein elektrisch leitfähiges Material, insbesondere ein Metall oder eine Legierung aufweisen. In einer bevorzugten Ausgestaltung umfasst die erste leitfähige Bahn eine erste Metallbahn, welche mindestens ein erstes Metall oder eine erste Legierung aufweist, insbesondere Kupfer. In dieser Ausgestaltung kann die zweite leitfähige Bahn eine zweite Metallbahn aufweisen, welche mindestens ein von dem ersten Metall oder ersten Legierung unterschiedliches zweites Metall, insbesondere Aluminium, oder eine hiervon verschieden Legierung umfassen kann.

Weiterhin umfasst die Elektrodenanordnung einen, zwischen der ersten Elektrode und der zweiten Elektrode eingebrachten Separator, welcher in Form mindestens einer elektrisch isolierenden Bahn vorliegt. Unter einem "Separator" ist hierbei eine elektrisch isolierende Einrichtung zu verstehen, welche die erste und die zweite Elektrode derart voneinander trennt und insbesondere für diesen Zweck auf einem gegenseitigen Abstand hält, damit die beiden Elektroden keinen direkten Kontakt miteinander aufbauen können, vorzugsweise um einen Kurzschluss in Folge einer direkten, elektrisch leitfähigen Verbindung zwischen den beiden Elektroden zu vermeiden. Die Form der isolierenden Bahn kann hierbei vorzugsweise der Form mindestens einer der elektrisch leitfähigen Bahn, wie oben oder unten beschrieben, entsprechen oder sie kann auch eine größerer Breite aufweisen, die über die mindestens eine elektrisch leitfähige Bahn hinausragt. Insbesondere kann die isolierende Bahn einen Kunststoff, etwa ein Polyolefin, und/oder einen keramischen Werkstoff umfassen, wobei der Kunststoff und/oder der keramische Werkstoff in einer besonders bevorzugten Ausgestaltung Poren aufweisen können, die etwa zur Aufnahme des für die elektrochemische Zelle erforderlichen Elektrolyten eingerichtet sind und zur Durchströmung durch die Lithium-Ionen dienen.

In einer bevorzugten Ausgestaltung kann der Separator wenigstens einen Bestandteil aus einem keramischen Werkstoff, wie zum Beispiel Al₂O₃ und/oder SiO₂, aufweisen, welcher insbesondere über eine hohe mechanische Festigkeit, eine hohe Temperaturbeständigkeit und einen geringen Schrumpf bei höheren Temperaturen verfügen kann. In Folge hoher Ströme während des Betriebs einer Elektrodenanordnung kann es mitunter zu einer starken Erwärmung der Elektrodenanordnung kommen, wobei der Separator, insbesondere wenn er aus einem polyolefinen Material gebildet ist, leicht schrumpfen kann, wodurch es zu einem direkten Kontakt zwischen den beiden Elektroden und damit zu einer Überhitzung der Elektrodenanordnung kommen kann, wodurch einen Brand ausgelöst werden kann. Vorzugsweise kann der keramische Separator aus einem biegsamen keramischen Kompositmaterial gebildet sein. Ein Kompositmaterial, das auch als Verbundmaterial bezeichnet werden kann, kann aus verschiedenen, miteinander fest verbundenen Materialien, insbesondere aus keramischen Materialien und aus polymeren Materialien, gebildet sein. Beispielsweise kann sich hierfür ein Vlies aus Polyethylenterephthalat (PET) eigenen, welches mit einer keramischen Imprägnierung und/oder Auflage versehen sein kann.

Vorzugsweise kann der keramische Separator auf einer Seite und/oder auf beiden Seiten des isolierenden Bandes mit einer ionischen Flüssigkeit benetzt sein, welche insbesondere die Biegsamkeit des keramischen Separators erhöhen und seine Anhaftung an mindestens einer der beiden Elektroden der Elektrodenanordnung verbessern kann.

Vorteilhaft kann sich der mindestens eine Separator wenigstens teilweise über eine Begrenzungskante wenigstens einer insbesondere benachbarten Elektrode, besonders bevorzugt über sämtliche Begrenzungskanten insbesondere benachbarter Elektroden hinaus, erstrecken. In dieser Ausgestaltung können sich etwaige elektrische Ströme zwischen den Kanten von Elektroden der Elektrodenanordnung verringern lassen.

Erfindungsgemäß ist die erste leitfähige Bahn in Form einer ersten Zickzackfaltung gelegt. Unter einer "Zickzack-Faltung", die auch als "Z-Faltung" bezeichnet werden kann, wird hierbei eine, beispielsweise in G. Reinhart, s.o., dargestellte Ausgestaltung der ersten Elektrode verstanden, wobei das erste leitfähige Band jeweils abschnittsweise in Form von übereinander liegenden ersten Lagen gefaltet ist, wobei sich einander gegenüberliegende erste Faltkanten ausbilden. Die Zickzack-Faltung zeichnet sich also dadurch aus, dass ein erster Abschnitt des ersten Bandes, welcher als erste Lage bezeichnet wird, auf eine Unterlage oder auf eine vorherige erste Lage gelegt wird, wobei an einem Ende des Abschnitts das Band insgesamt um 180° umgelegt wird, um auf diese Weise eine weitere Lage des selben Bandes auszubilden, wobei zwischen der ersten Lage und der weiteren Lage dadurch über die Breite des Bandes eine Faltkante ausgebildet ist. Diese Art der Anordnung ist über zumindest einen Teil des Bandes, insbesondere das gesamte Band, vorzugsweise in gleicher Weise ausgeführt, so dass die erste leitfähige Bahn in Form einer Mehrzahl von parallel übereinander liegenden, ersten Lagen vorliegt.

Die Elektrodenanordnung umfasst weiterhin eine zweite leitfähige Bahn, welche in Form einer zweiten Zickzack-Faltung gelegt ist, wodurch durch die zweite Zickzack-Faltung, in Analogie zu der ersten Zickzack-Faltung, eine Mehrzahl von parallel übereinander liegenden zweiten Lagen ausgebildet ist, wobei zwei unmittelbar aneinander grenzende Lagen des zweiten leitfähigen Bandes jeweils über die Breite des zweiten leitfähigen Bandes eine zweite Faltkante ausbilden.

Erfindungsgemäß sind nun das erste leitfähige Band und das zweite leitfähige Band derart in die Elektrodenanordnung eingebracht, dass die ersten Lagen und die zweiten Lagen parallel zueinander ausgerichtet sind. Wird durch die einander gegenüber liegenden ersten Faltkanten der ersten Zickzack-Faltung eine erste Faltrichtung der ersten Zickzack-Faltung und durch einander gegenüber liegende zweite Faltkante in der zweiten Zickzack-Faltung eine zweite Faltrichtung der zweiten Zickzack-Faltung definiert, so nehmen die erste Faltrichtung und die zweite Faltrichtung einen Winkel zueinander ein, der erfindungsgemäß in einem Bereich von mindestens 60° und von höchstens 120°, vorzugsweise von mindestens 80° und höchstens von 100°, liegt, wobei der Winkel besonders bevorzugt einen Wert von 90° annimmt.

Gemäß der vorliegenden Erfindung sind jeweils zwei benachbarte erste Lagen der ersten leitfähigen Bahn derart übereinander gelegt, dass sie dadurch eine Doppellage ausbilden, während jeweils zwischen zwei Doppellagen eine zweite Lage der zweiten leitfähigen Bahn eingebracht ist. Insbesondere in dieser besonders bevorzugten Ausgestaltung, jedoch nicht hierauf beschränkt, können jeweils eine erste leitfähige Bahn und eine isolierende Bahn zusammengeführt sein, dass die erste leitfähige Bahn zusammen mit genau einer isolierenden Bahn eine Mehrzahl von übereinander liegenden ersten Lagen ausbilden kann. Alternativ oder auch zusätzlich hierzu können zwei isolierende Bahnen zusammen mit der zweiten leitfähigen Bahn derart geführt sein, dass sich eine Mehrzahl von übereinander liegenden zweiten Lagen ausbilden kann, wobei hierbei die zweite leitfähige Bahn genau zwischen zwei der isolierenden Bahnen geführt sein kann. Die in diesem Abschnitt beschriebenen Ausgestaltungen können insbesondere sicherstellen, dass sich die beiden elektrisch leitfähigen Elektrodenbahnen durch bevorzugt eine oder zwei isolierende Bahnen derart voneinander trennen lassen, dass ein elektrischer Kontakt zwischen den elektrisch leitfähigen Elektrodenbahnen unterbleiben kann.

Andere Ausgestaltungen, die festlegen, in welcher Weise die beiden Lagen in der Elektrodenanordnung in Bezug zueinander angeordnet sein können, sind jedoch denkbar. Vorzugsweise kann die Elektrodenanordnung mehr als eine erste Elektrode und mehr als eine zweite Elektrode umfassen, wobei die Elektroden verschiedener Polarität jeweils mittels wenigstens eines Separators voneinander getrennt sind. Insbesondere kann hierbei der Schichtbau in der Elektrodenanordnung jeweils eine Elektrode aufweisen, auf die jeweils ein Separator folgt, der die Elektrode von der nächsten, vorzugsweise mit der anderen Polarität ausgestatteten Elektrode trennt. Vorzugsweise können in dieser Elektroden-anordnung mehrere Elektroden gleicher Polarität jeweils miteinander elektrisch leitend verbunden und vorzugsweise parallel, aber auch in Reihe zueinander geschaltet sein.

In einer besonders bevorzugten Ausgestaltung kann die erste leitfähige Bahn und/oder die zweite leitfähige Bahn der erfindungsgemäßen Elektrodenanordnung jeweils eine erste Seite und eine zweite Seite aufweisen, wobei die erste Seite und/oder die zweite Seite der elektrisch leitfähigen Bahnen zumindest teilweise mit einem Aktivmaterial versehen sein können. Diese Ausgestaltung kann insbesondere vorsehen, dass übereinander liegende elektrisch leitfähige Bahnen, die nicht durch mindestens eine isolierende Bahn voneinander getrennt sind, nicht mit dem Aktivmaterial beschichtet sein können. Demgemäß kann die erste Seite der ersten leitfähigen Bahn, die erste Seite der zweiten leitfähigen Bahn und die zweite Seite der zweiten leitfähigen Bahn zumindest teilweise mit dem Aktivmaterial versehen sein, während die zweite Seite der ersten leitfähigen Bahn frei von Aktivmaterial bleiben kann. Die Beschichtungen der leitfähigen Bahnen der Elektrodenanordnung können vorzugsweise derart ausgestaltet sein, dass zwischen Bereichen auf der ersten Seite und/oder zwischen Bereichen auf der zweiten Seite, welche jeweils mit dem Aktivmaterial versehen sind, Lücken vorgesehen sind, welche vorzugsweise zumindest an den ersten Faltkanten und an den zweiten Faltkanten sowie an Kontaktierungsbereichen auftreten können. Unter "Kontaktierungsbereichen" werden Bereiche auf der ersten leitfähigen Bahn und/oder auf der zweiten leitfähigen Bahn verstanden, die für eine spätere Kontaktierung mit jeweils einem Ableiter, welcher den elektrischen Kontakt zu der ersten Elektrode bzw. zu der zweiten Elektrode herstellen kann, vorgesehen sind. Die Kontaktierungsbereiche liegen an Randbereichen, über welche die erste leitfähige Bahn und/oder die zweite leitfähige Bahn verfügen. Insbesondere für einen Einsatz als Kontaktierungsbereich kann der Randbereich zumindest teilweise Lücken aufweisen; Lücken in dem Randbereich können jedoch auch von Vorteil sein, etwa um zu vermeiden, dass sich Aktivmaterial vom Rand der ersten leitfähigen Bahn und/oder der zweiten leitfähigen Bahn ablösen kann.

Unter einem "Aktivmaterial" wird im Falle der vorliegenden Erfindung, je nachdem, ob mit dem Aktivmaterial die Kathode oder die Anode beschichtet sein kann, ein Lithium-haltiges anorganisches Übergangsmetalloxid bzw. Graphit verstanden. Für geeignete Aktivmaterialien wird in diesem Zusammenhang vorzugsweise auf die in B. Ketterer, siehe oben, vorgestellten Materialien verwiesen, wobei sich für die Ausgestaltung der erfindungsgemäßen Elektrodenanordnung auch weitere, aus dem Einsatz in anderen elektrochemischen Zellen bekannte Materialien eignen können.

Die vorliegende Erfindung betrifft in einem weiteren Aspekt ein Verfahren zur Herstellung einer Elektrodenanordnung, welche einen Schichtaufbau mit mindestens einer ersten Elektrode, mindestens einer zweiten Elektrode und mindestens einem, zwischen der ersten Elektrode und der zweiten Elektrode eingebrachten Separator umfasst. Das erfindungsgemäße Verfahren umfasst mindestens die im Folgenden beschriebenen Schritte a) bis d), wobei je nach Ausgestaltung weitere Schritte hinzukommen können. Die Schritte a) bis d) werden vorzugsweise in der dargestellten Reihenfolge durchgeführt, wobei sich die Schritte a) und b) vertauschen lassen können. Gemäß Schritt a) wird eine erste Elektrode in Form einer ersten leitfähigen Bahn und gemäß Schritt b) eine zweite Elektrode in Form einer zweiten leitfähigen Bahn bereitgestellt.

Die Schritte c) und d) werden erfindungsgemäß, je nach gewählter Ausgestaltung, in dieser Reihenfolge oder der umgekehrten Reihenfolge mehrfach wiederholt, wodurch sich eine Mehrzahl von übereinander liegenden ersten Lagen in Form einer ersten Zickzack-Faltung und eine Mehrzahl von übereinander liegenden zweiten Lagen in Form einer zweiten Zickzack-Faltung ausbildet. Die ersten Lagen und die zweiten Lagen werden hierbei so gelegt, dass sie parallel zueinander angeordnet werden. Einander gegenüberliegende erste Faltkanten der ersten Zickzack-Faltung definieren eine erste Faltrichtung der ersten Zickzack-Faltung, während einander gegenüberliegende zweite Faltkanten der zweiten Zickzack-Faltung eine zweite Faltrichtung der zweiten Zickzack-Faltung definieren. Erfindungsgemäß nehmen hierbei die erste Faltrichtung der ersten Zickzack-Faltung und die zweite Faltrichtung der zweiten Zickzack-Faltung einen Winkel von mindestens 60° und von höchstens 120°, vorzugsweise von mindestens 80° und von höchstens 100°, insbesondere von 90°, zueinander ein.

Es werden jeweils zwei benachbarte erste Lagen derart übereinander gelegt, dass sie jeweils eine Doppellage ausbilden, wobei zwischen zwei Doppellagen jeweils eine, insbesondere eine einzige, zweite Lage eingebracht werden kann. Demgemäß kann in dieser Ausgestaltung Schritt c) zweimal hintereinander durchgeführt werden, bevor im Anschluss hieran jeweils Schritt d) ein einziges Mal durchgeführt wird. Andere Ausgestaltungen sind denkbar. Auf diese Weise kann jedoch eine Elektrodenanordnung erhalten werden, welche insbesondere die unten aufgeführten Vorteile aufweisen kann.

Erfindungsgemäß wird weiterhin der Separator in Form einer isolierenden Bahn bereitgestellt, wobei die isolierende Bahn derart zwischen die erste leitfähige Bahn und die zweite leitfähige Bahn eingebracht wird, dass die isolierende Bahn des Separators die erste leitfähige Bahn von der zweiten leitfähigen Bahn trennt. Auf diese Weise wird ein etwaiger, nachteiliger elektrischer Kontakt zwischen der ersten leitfähigen Bahn und der zweiten leitfähigen Bahn vermieden.

In einer besonders bevorzugten Ausgestaltung kann hierbei die mindestens eine isolierende Bahn zusammen mit der ersten leitfähigen Bahn und/oder zusammen mit der zweiten leitfähigen Bahn bereitgestellt und insbesondere zusammen mit der jeweils bereitgestellten leitfähigen Bahn gemäß Schritt c) oder gemäß Schritt d) gefaltet werden. In einer ersten bevorzugten Ausgestaltung kann hierbei die erste leitfähige Bahn zusammen mit genau einer der mindestens einen isolierenden Bahn geführt werden. In einer zweiten, ebenfalls bevorzugten Ausgestaltung kann hierzu die zweite leitfähige Bahn zwischen genau zwei der isolierenden Bahnen geführt werden. Diese Ausgestaltungen sind insbesondere dann vorteilhaft, wenn die erste leitfähige Bahn Doppellagen ausbildet, zwischen denen jeweils eine zweite Lage der zweiten leitfähigen Bahn eingebracht ist. Andere Ausgestaltungen sind jedoch denkbar.

Für weitere Einzelheiten in Bezug auf das erfindungsgemäße Verfahren wird auf die oben bzw. unten näher beschriebene Elektrodenanordnung verwiesen, welche mit diesem Verfahren herstellbar ist. Je nach gewählter Ausgestaltung können darüber hinaus weitere, übliche Anoden-, Separator-, Kathodenschichten sowie Elektrolyte in allen möglichen Zusammensetzungen, Schichtdicken und Dimensionierungen verwendet werden. Insbesondere können übliche Kombinationen aus Anoden, Kathoden, Separator und Elektrolyt eingesetzt werden, wie sie in Lithium- Ionen- oder Lithium-Ionen-Polymer-Zellen Verwendung finden.

Die vorliegende Erfindung betrifft in einem weiteren Aspekt eine elektrochemische Zelle, welche zumindest eine Elektrodenanordnung, die oben oder unten beschrieben wird, und/oder eine mit dem erfindungsgemäßen Verfahren hergestellte Elektrodenanordnung umfasst. Die elektrochemische Zelle umfasst weiterhin mindestens einen Elektrolyten, mindestens einen ersten Ableiter für die erste Elektrode und mindestens einen zweiten Ableiter für die zweite Elektrode. Die elektrochemische Zelle kann darüber hinaus weitere Bestandteile aufweisen, insbesondere ein Gehäuse, welches die elektrochemische Zelle zumindest teilweise, vorzugsweise bis auf Öffnungen zur Anbringung von elektrischen Kontakten vollständig, umgeben kann. Unter einem "Gehäuse" wird hierbei ein unter üblichen Bedingungen festes Material verstanden, das insbesondere dazu eingesetzt wird, um die elektrochemische Zelle zumindest teilweise von ihrer Umgebung zu trennen. Darüber hinaus kann das Gehäuse weitere Funktionen ausüben, etwa den Elektrolyten aufzunehmen, vorzugsweise dann, wenn der Elektrolyt zumindest teilweise in flüssiger Form vorliegt, so dass der Elektrolyt in dieser Form auf einfache Weise in das Gehäuse eingebracht, etwa eingegossen, werden kann. Wie eingangs bereits beschrieben, bezeichnet der "Elektrolyt" eine feste oder flüssige Substanz, in welcher sich die Ionen zwischen den Elektroden bewegen können. In einer alternativen, ebenfalls bevorzugten Ausgestaltung kann der Elektrolyt zusammen mit dem Separator bereitgestellt werden, etwa dadurch, dass der Separator mit dem Elektrolyt getränkt sein kann, beispielsweise indem der Elektrolyt in die Poren, über die der Separator verfügen kann, eingebracht ist.

In einer bevorzugten Ausgestaltung können der erste Ableiter und/oder der zweite Ableiter an Lücken zwischen Bereichen, welche mit dem Aktivmaterial versehen sind, angebracht sein. Hierbei ist der erste Ableiter für die erste Elektrode an einer ersten Faltkante der ersten leitfähigen Bahn angebracht, während der zweite Ableiter für den zweiten Elektrolyten in einem Randbereich der zweiten leitfähigen Bahn angebracht sein.

In einer bevorzugten Ausgestaltung kann die elektrochemische Zelle mit einem isolierenden Dämmmaterial umwickelt sein, insbesondere um vorteilhaft den Verbund zu stärken und die Langlebigkeit und Sicherheit des Systems zu verbessern. Diese Ausgestaltung kann vorteilhaft auch der Abscheidung von Materialien aus dem Aktivmaterial, etwa Lithium oder Eisen in Form von Dendriten, entgegenwirken.

Die vorliegende Erfindung betrifft in einem weiteren Aspekt ein Verfahren zur Herstellung einer elektrochemischen Zelle, wobei mindestens eine oben oder unten beschriebene Elektrodenanordnung, welche mindestens eine erste Elektrode, mindestens eine zweite Elektrode und mindestens einen, zwischen der ersten Elektrode und der zweiten Elektrode eingebrachten Separator umfasst, bereitgestellt wird. Erfindungsgemäß wird die mindestens eine Elektrodenanordnung hierzu mit mindestens einem Elektrolyten, mindestens einem Ableiter für die erste Elektrode und mindestens einem zweiten Ableiter für die zweite Elektrode versehen. In einer besonders bevorzugten Ausgestaltung kann hierzu ein mit dem Elektrolyt getränkter Separator eingesetzt werden. Ebenfalls bevorzugt ist eine Ausgestaltung, bei welcher die mindestens eine Elektrodenanordnung zumindest teilweise von einem Gehäuse umgeben werden kann, wobei das Gehäuse über Anschlüsse für den ersten Ableiter und über Anschlüsse für den zweiten Ableiter verfügen kann. Insbesondere in der letzteren Ausgestaltung kann der Elektrolyt in flüssiger Form bereitgestellt und auf einfache Weise in das Gehäuse eingebracht werden.

Die vorliegende Erfindung betrifft in einer weiteren Ausgestaltung eine Sekundärbatterie, welche mindestens eine elektrochemische Zelle in der oben oder unten beschriebenen Weise umfasst. In einer besonders bevorzugten Ausgestaltung kann hierbei auch die Sekundärbatterie zumindest teilweise von einem Gehäuse umgeben sein, welches über elektrische Anschlüsse verfügen kann.

Sowohl in Bezug auf die elektrochemische Zelle als auch auf das Verfahren zur Herstellung der elektrochemischen Zelle als auch auf die Sekundärbatterie wird für weitere Einzelheiten auf die oben oder unten stehende detaillierte Beschreibung der Elektrodenanordnung verwiesen.

Die erfindungsgemäße Elektrodenanordnung und eine elektrochemische Zelle, welche eine derartige Elektrodenanordnung aufweist, sowie eine Sekundärbatterie, welche mindestens eine derartige elektrochemische Zelle umfasst, können eine Reihe von Vorteilen aufweisen. Hierbei kann es besonders vorteilhaft sein, dass das erfindungsgemäße Verfahren ein Falten der mindestens einen ersten Elektrode, der mindestens einen zweiten Elektrode und des mindestens einen, zwischen der ersten Elektrode und der zweiten Elektrode eingebrachten Separators aufweist, wobei die erforderliche Stapelfolge auf einfache Weise eingehalten werden kann. Dadurch, dass die beiden Elektroden in Form von leitfähigen Bahnen und der Separator in Form mindestens einer isolierenden Bahn bereitgestellt werden, erübrigt sich das Herstellen und Positionieren von Einzelelektroden, wodurch sich eine wesentliche Quelle von Fehlern im Herstellungsprozess, die sich beispielsweise in Form von Partikelbildung, Schichtrauheit und/oder Rissen in den Einzelelektroden auswirken können, vermeiden lässt. Das erfindungsgemäße Verfahren erlaubt es vielmehr, Stapel von übereinander liegenden ersten Lagen und zweiten Lagen aus den beiden leitfähigen Bahnen auszubilden, ohne dass jeweils einzelne Elektrodenblätter zugeschnitten, gereinigt, bereitgestellt, positioniert und vor elektrostatischer Aufladung geschützt werden müssen. Auf diese Weise kann sich ein zusätzlicher Trocknungsschritt, der üblicherweise in der Trocknung und Reinigung der einzelnen Elektrodenblätter besteht, einsparen lassen.

Das erfindungsgemäße Faltverfahren kann demgemäß die Prozesssicherheit und die Geschwindigkeit der Herstellung der Elektrodenanordnungen bei gleichzeitig erhöhter Ausbeute erhöhen. Die gleichzeitige Führung einer leitfähigen Bahn, auf welche bereits das Aktivmaterial in Form einer dünnen Schicht aufgebracht sein kann, zusammen mit mindestens einer isolierenden Separatorbahn kann die oben beschriebenen Fehlerquellen in der Elektrodenanordnung und ihre Folgen signifikant verringern.

Die erfindungsgemäße Ausgestaltung, die erste Faltrichtung der ersten Zickzackfaltung und die zweite Faltrichtung der zweiten Zickzackfaltung in einem Winkel von mindestens 60° und von höchstens 120°, bevorzugt rechtwinklig, zueinander anzuordnen, kann zu einer besseren Fixierung der einzelnen Elektroden innerhalb der Elektrodenanordnung führen und ein mögliches Verrutschen der einzelnen Bestandteile in den Schichtaufbau bei einer Erhöhung der Temperatur verringern. Durch die vorteilhafte Fixierung und/oder die im Wesentlichen orthogonale Anordnung der beiden Faltrichtungen zueinander können insbesondere Mikrorisse vermieden werden, ohne dass bei der Herstellung der Elektrodenanordnung zusätzliche Verfahrensschritte, wie etwa aufwändige Klebungen oder Laminierungen, erforderlich wären. Auf diese Weise können langlebige Elektrodenanordnungen bereitgestellt werden, deren Sicherheit insbesondere durch die Vermeidung von Mikrorissen in den Elektroden und/oder dem Aktivmaterial, verbessert ist. Diese Vorteile der Elektrodenanordnung finden sich entsprechend auch in der elektrochemischen Zelle, welche eine derartige Elektrodenanordnung umfasst sowie in der Sekundärbatterie, die derartige elektrochemische Zellen aufweist.

Zusammengefasst sind die folgenden Ausgestaltungen der vorliegenden Erfindung bevorzugt:
1. Elektrodenanordnung, umfassend einen Schichtaufbau mit mindestens einer ersten Elektrode, mindestens einer zweiten Elektrode und mindestens einem zwischen der ersten Elektrode und der zweiten Elektrode eingebrachten Separator, wobei die erste Elektrode mindestens eine erste leitfähige Bahn aufweist, wobei die erste leitfähige Bahn in einer ersten Zickzackfaltung gefaltet ist, wobei durch die erste Zickzackfaltung eine Mehrzahl von übereinander liegenden ersten Lagen ausgebildet ist, wobei einander gegenüberliegende erste Faltkanten der ersten Zickzackfaltung eine erste Faltrichtung der ersten Zickzackfaltung definieren, wobei die zweite Elektrode mindestens eine zweite leitfähige Bahn aufweist, wobei die zweite leitfähige Bahn in einer zweiten Zickzackfaltung gefaltet ist, wobei durch die zweite Zickzackfaltung eine Mehrzahl von übereinander liegenden zweiten Lagen ausgebildet ist, wobei einander gegenüberliegende zweite Faltkanten der zweiten Zickzackfaltung eine zweiten Faltrichtung der zweiten Zickzackfaltung definieren, wobei die ersten Lagen und die zweiten Lagen parallel zueinander angeordnet sind, wobei die erste Faltrichtung und die zweite Faltrichtung einen Winkel von mindestens 60° und von höchstens 120° zueinander einnehmen, und wobei der Separator in Form mindestens einer isolierenden Bahn vorliegt.
2. Elektrodenanordnung nach der vorangehenden Ausgestaltung, wobei der Winkel zwischen der ersten Faltrichtung und der zweiten Faltrichtung 90° beträgt.
3. Elektrodenanordnung nach einer der vorangehenden Ausgestaltungen, wobei jeweils zwei benachbarte erste Lagen derart übereinander liegen, dass sie jeweils eine Doppellage ausbilden, und zwischen zwei Doppellagen jeweils eine zweite Lage eingebracht ist.
4. Elektrodenanordnung nach einer der vorangehenden Ausgestaltungen, wobei die erste leitfähige Bahn zusammen mit genau einer der mindestens einen isolierenden Bahn eine Mehrzahl von übereinander liegenden ersten Lagen ausbildet.
5. Elektrodenanordnung nach einer der vorangehenden Ausgestaltungen, wobei die mindestens eine isolierende Bahn zusammen mit der zweiten leitfähigen Bahn eine Mehrzahl von übereinander liegenden zweiten Lagen ausbildet.
6. Elektrodenanordnung nach der vorangehenden Ausgestaltung, wobei die zweite leitfähige Bahn als dreilagige Bahn zwischen genau zwei der isolierenden Bahnen geführt ist
7. Elektrodenanordnung nach einer der vorangehenden Ausgestaltungen, wobei die erste leitfähige Bahn eine erste Metallbahn, die mindestens ein erstes Metall aufweist, umfasst.
8. Elektrodenanordnung nach der vorangehenden Ausgestaltung, wobei die erste Metallbahn Kupfer aufweist.
9. Elektrodenanordnung nach einer der vorangehenden Ausgestaltungen, wobei die zweite leitfähige Bahn eine zweite Metallbahn, die mindestens ein, von dem ersten Metall unterschiedliches zweites Metall aufweist, umfasst.
10. Elektrodenanordnung nach der vorangehenden Ausgestaltung, wobei die zweite Metallbahn Aluminium aufweist.
11. Elektrodenanordnung nach einer der vorangehenden Ausgestaltungen, wobei die isolierende Bahn einen Kunststoff und/oder einen keramischen Werkstoff umfasst.
12. Elektrodenanordnung nach der vorangehenden Ausgestaltung, wobei der Kunststoff und/oder der keramische Werkstoff Poren aufweisen.
13. Elektrodenanordnung nach einer der vorangehenden Ausgestaltungen, wobei die erste leitfähige Bahn und/oder die zweite leitfähige Bahn jeweils eine erste Seite und eine zweite Seite aufweisen, wobei die erste Seite und/oder die zweite Seite zumindest teilweise derart mit einem Aktivmaterial versehen sind, dass übereinander liegende Bahnen, die nicht durch mindestens eine isolierende Bahn voneinander getrennt sind, frei von dem Aktivmaterial sind.
14. Elektrodenanordnung nach der vorangehenden Ausgestaltung, wobei das Aktivmaterial ein anorganisches Lithiumsalz und/oder Graphit aufweist.
15. Elektrodenanordnung nach einer der beiden vorangehenden Ausgestaltungen, wobei die erste Seite der ersten leitfähigen Bahn, die erste Seite der zweiten leitfähigen Bahn und die zweite Seite der zweiten leitfähigen Bahn zumindest teilweise mit dem Aktivmaterial versehen sind, während die zweite Seite der ersten leitfähigen Bahn nicht mit dem Aktivmaterial versehen ist.
16. Elektrodenanordnung nach einer den drei vorangehenden Ausgestaltungen, wobei zwischen Bereichen auf der ersten Seite und/oder der zweiten Seite, welche mit dem Aktivmaterial versehen sind, Lücken zumindest an den ersten Faltkanten und an den zweiten Faltkanten und an Kontaktierungsbereichen vorgesehen sind.
17. Elektrodenanordnung nach der vorangehenden Ausgestaltung, wobei die erste leitfähige Bahn und/oder die zweite leitfähige Bahn über einen Randbereich verfügen, wobei der Randbereich zumindest teilweise Lücken aufweist.
18. Verfahren zur Herstellung einer Elektrodenanordnung, umfassend einen Schichtaufbau mit mindestens einer ersten Elektrode und mindestens einer zweiten Elektrode sowie mindestens einem zwischen der ersten Elektrode und der zweiten Elektrode eingebrachten Separator, mit den Schritten:
   a) Bereitstellen einer ersten Elektrode in Form einer ersten leitfähigen Bahn;
   b) Bereitstellen einer zweiten Elektrode in Form einer zweiten leitfähigen Bahn;
   c) Falten der ersten leitfähigen Bahn zu einer ersten Lage;
   d) Falten der zweiten leitfähigen Bahn zu einer zweiten Lage;
   wobei die Schritte c) und d) mehrfach derart wiederholt werden, so dass sich eine Mehrzahl von übereinander liegenden ersten Lagen in Form einer ersten Zickzackfaltung, wobei einander gegenüberliegende erste Faltkanten der ersten Zickzackfaltung eine erste Faltrichtung der ersten Zickzackfaltung definieren, und sich eine Mehrzahl von übereinander liegenden zweiten Lagen in Form einer zweiten Zickzackfaltung, wobei einander gegenüberliegende zweite Faltkanten der zweiten Zickzackfaltung eine zweite Faltrichtung der zweiten Zickzackfaltung definieren, ausbilden, wobei die ersten Lagen und die zweiten Lagen parallel zueinander angeordnet werden, wobei die erste Faltrichtung und die zweite Faltrichtung einen Winkel von mindestens 60° und von höchstens 120° zueinander einnehmen, und wobei der Separator in Form mindestens einer isolierenden Bahn bereitgestellt wird, welche derart zwischen die erste leitfähige Bahn und die zweite leitfähige Bahn eingebracht wird, dass der Separator die erste leitfähige Bahn von der zweiten leitfähigen Bahn trennt.
19. Verfahren nach der vorangehenden Ausgestaltung, wobei der Winkel zwischen der ersten Faltrichtung und der zweiten Faltrichtung 90° gewählt wird.
20. Verfahren nach einer der vorangehenden Ausgestaltungen betreffend das Verfahren, wobei jeweils zwei benachbarte erste Lagen derart übereinander gelegt werden, dass sie jeweils eine Doppellage ausbilden, und zwischen zwei Doppellagen jeweils eine zweite Lage eingebracht wird.
21. Verfahren nach einer der vorangehenden Ausgestaltungen betreffend das Verfahren, wobei die mindestens eine isolierende Bahn zusammen mit der ersten leitfähigen Bahn und/oder zusammen mit der zweiten leitfähigen Bahn bereitgestellt wird.
22. Verfahren nach einer der vorangehenden Ausgestaltungen betreffend das Verfahren, wobei die erste leitfähige Bahn zusammen mit genau einer der mindestens einen isolierenden Bahn geführt wird.
23. Verfahren nach einer der vorangehenden Ausgestaltungen betreffend das Verfahren, wobei die zweite leitfähige Bahn als dreilagige Bahn zwischen genau zwei der isolierenden Bahnen geführt wird.
24. Elektrochemische Zelle, umfassend mindestens eine Elektrodenanordnung gemäß einem der Ausgestaltungen betreffend die Elektrodenanordnung, mindestens einen Elektrolyten, mindestens einen ersten Ableiter für die erste Elektrode und mindestens einen zweiten Ableiter für die zweite Elektrode.
25. Elektrochemische Zelle nach der vorangehenden Ausgestaltung, wobei der erste Ableiter und/oder der zweite Ableiter an Lücken zwischen Bereichen, die mit einem Aktivmaterial versehen sind, angebracht sind.
26. Elektrochemische Zelle nach der vorangehenden Ausgestaltung, wobei der erste Ableiter an einer ersten Faltkante der ersten leitfähigen Bahn und der zweite Ableiter in einem Randbereich der zweiten leitfähigen Bahn angebracht sind.
27. Elektrochemische Zelle nach einer der Ausgestaltungen betreffend die elektrochemische Zelle, wobei der Separator zumindest teilweise mit dem Elektrolyt getränkt ist.
28. Elektrochemische Zelle nach einer der Ausgestaltungen betreffend die elektrochemische Zelle, wobei die elektrochemische Zelle zumindest teilweise von einem Gehäuse umgeben ist.
29. Elektrochemische Zelle nach der vorangehenden Ausgestaltung, wobei der Elektrolyt in flüssiger Form in das Gehäuse eingebracht ist.
30. Verfahren zur Herstellung einer elektrochemischen Zelle gemäß einer der Ausgestaltungen betreffend die elektrochemische Zelle, wobei mindestens eine Elektrodenan-ordnung mit einem Schichtaufbau mit mindestens einer ersten Elektrode, mindestens einer zweiten Elektrode und mindestens einem zwischen der ersten Elektrode und der zweiten Elektrode eingebrachten Separator bereitgestellt wird, wobei die Elektrodenanordnung mit mindestens einem Elektrolyten, mindestens einem ersten Ableiter für die erste Elektrode und mindestens einem zweiten Ableiter für die zweite Elektrode versehen wird.
31. Verfahren nach der vorhergehenden Ausgestaltung, wobei ein zumindest teilweise mit dem Elektrolyt getränkter Separator eingesetzt wird.
32. Verfahren nach einer der vorhergehenden Ausgestaltungen betreffend ein Verfahren zur Herstellung einer elektrochemischen Zelle, wobei die mindestens eine Elektrodenanordnung zumindest teilweise von einem Gehäuse umgeben wird, wobei das Gehäuse über Anschlüsse für den ersten Ableiter und für den zweiten Ableiter verfügt.
33. Verfahren nach der vorhergehenden Ausgestaltung, wobei der Elektrolyt in flüssiger Form in das Gehäuse eingebracht wird.
34. Sekundärbatterie, umfassend mindestens eine elektrochemische Zelle gemäß einer der Ausgestaltungen betreffend die elektrochemische Zelle.
35. Sekundärbatterie nach der vorangehenden Ausgestaltung, die zumindest teilweise von einem Gehäuse umgeben ist und über elektrische Anschlüsse verfügt.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schema-tisch dargestellt. Gleiche Bezugsziffern in den einzelnen Figuren bezeichnen dabei gleiche oder funktionsgleiche und/oder hinsichtlich ihrer Funktionen einander entsprechende Elemente.

Im Einzelnen zeigen:
- Figur 1:: Perspektivische Aufsicht auf eine erste Ausführung einer Elektrodenanordnung, bei welcher die beiden Ableiter an gegenüber liegenden Seiten der Elektrodenanordnung angebracht werden können; die Darstellung ist senkrecht zu den einzelnen Lagen gedehnt, so dass die einzelnen Schichten besser zu erkennen sind;
- Figur 2:: Schematische Darstellung der Beschichtung der jeweiligen ersten und zweiten Seiten in der Ausführung gemäß Figur 1 mit Aktivmaterial für die erste Elektrode (a) bzw. für die zweite Elektrode (b);
- Figur 3:: Ausführung gemäß Figur 1 ohne Dehnung der Abstände;
- Figur 4:: Perspektivische Darstellung einer zweiten Ausführung der Elektrodenanordnung, wobei die beiden Ableiter an die beiden senkrecht zueinander stehenden Faltkanten der ersten leitfähigen Bahn und der zweiten leitfähigen Bahn angebracht werden können; die Darstellung senkrecht zu den einzelnen Lagen ist gedehnt;
- Figur 5:: Schematische Darstellung der Beschichtung der jeweiligen ersten und zweiten Seiten in der Ausführung gemäß Figur 4 mit Aktivmaterial für die erste Elektrode (a) bzw. für die zweite Elektrode (b);
- Figur 6:: Ausführung gemäß Figur 4 ohne Dehnung der Abstände;
- Figur 7:: Perspektivische Darstellung einer Ausführung der erfindungsgemäßen Elektrodenanordnung, wobei die zweite leitfähige Bahn zwischen genau zwei isolierenden Bahnen geführt ist; die Darstellung senkrecht zu den einzelnen Lagen ist gedehnt.

### Ausführungsbeispiele

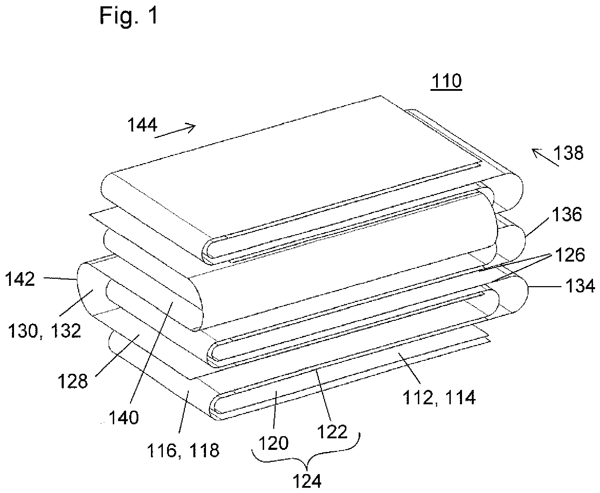

In Figur 1 ist perspektivisch ein erstes Ausführungsbeispiel für eine Elektrodenanordnung 110 dargestellt. Die Elektrodenanordnung 110 umfasst einen Schichtaufbau aus einer ersten Elektrode 112, welche im Folgenden auch als "Anode" bezeichnet wird und welche in Form einer ersten leitfähigen Bahn 114 zusammen mit einem Separator 116, der in Form einer isolierenden Bahn 118 vorliegt, geführt ist. Jeweils zwei benachbarte Lagen 120, 122 der ersten leitfähigen Bahn 114 bilden eine Doppellage 124 aus, wobei zwischen jeder Doppellage 124 und einer hierzu benachbarten weiteren Doppellage 126 eine zweite Lage 128 der zweiten Elektrode 130, die im Folgenden auch als "Kathode" bezeichnet wird, als Teil einer zweiten leitfähigen Bahn 132 eingebracht ist. In der vorliegenden Ausführung ist die erste leitfähige Bahn 114 der ersten Elektrode 112 zusammen mit der isolierenden Bahn 118 des Separators 116 in Form einer ersten Zickzack-Faltung gefaltet, wobei sich hierdurch mehrere übereinander liegende erste Lagen 120, 122 und einander gegenüber liegende erste Faltkanten 134, 136 der ersten Zickzack-Faltung ausbilden. Hierbei definieren die einander gegenüber liegenden ersten Faltkanten 134, 136 eine erste Faltrichtung 138 der ersten Zickzack-Faltung. In analoger Weise ist die zweite leitfähige Bahn in einer zweiten Zickzack-Faltung gefaltet, welche eine Mehrzahl von übereinander liegenden zweiten Lagen 128, 140 ausbildet, wobei auch hier einander gegenüber liegende zweite Faltkanten 142 eine zweite Faltrichtung 144 definieren. Erfindungsgemäß sind sowohl die ersten Lagen 120, 122 als auch die zweiten Lagen 128, 140 parallel zueinander angeordnet, während die erste Faltrichtung 138 und die zweite Faltrichtung 144 im vorliegenden Ausführungsbeispiel einen Winkel von 90° zueinander annehmen.

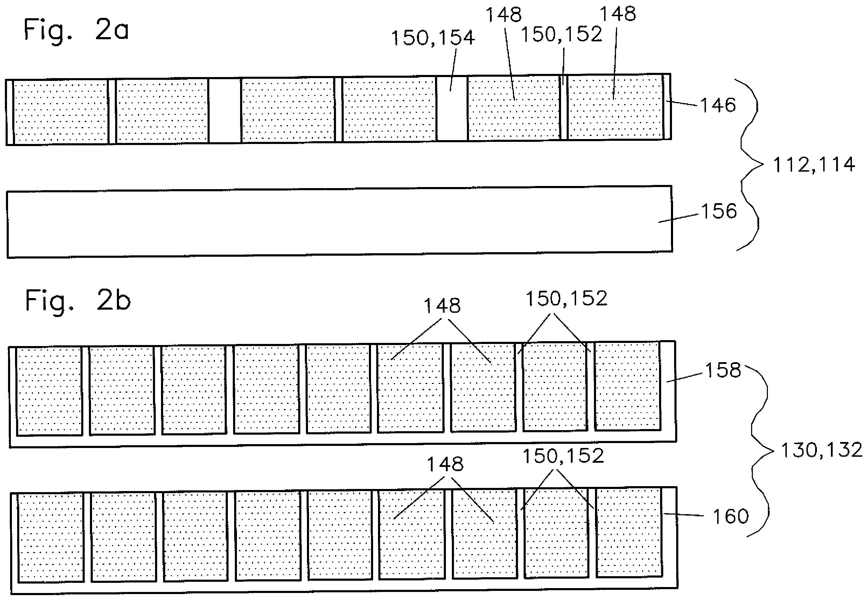

Zur Herstellung der in Figur 1 dargestellten Elektrodenanordnung 110 wird, wie in Figur 2 a) dargestellt, zunächst eine erste Elektrode 112 als Anode in Form einer ersten leitfähigen Bahn 114 zusammen mit einem Separator 116 in Form einer isolierenden Bahn 118 bereitgestellt. Hierbei verfügt die erste leitfähige Bahn 114 über eine erste Seite 146, wobei die erste Seite 146 in Bereichen 148, die jeweils durch Lücken 150 voneinander getrennt sind, mit einem Aktivmaterial beschichtet ist. Wie in dieser besonders bevorzugten Ausgestaltung dargestellt, unterscheiden sich die Beschichtungslücken 150 in ihrer Breite entlang der ersten leitfähigen Bahn 114, wobei eine kleine Beschichtungslücke 152 sich insbesondere zum Falten der ersten leitfähigen Bahn 114 zu einer Mehrzahl von übereinander liegenden Lagen 120, 122 eignet, um ein Ablösen von Aktivmaterial in den ersten Faltkanten 134, 136 zu vermeiden. Eine große Beschichtungslücke 154 wird ebenfalls zur Faltung bei der Ausbildung des Schichtaufbaus der Elektrodenanordnung 110 benötigt, kann aber später auch zum Anbringen eines Ableiters an die erste Elektrode 112 dienen. Im Gegensatz zur ersten Seite 146 bleibt die zweite Seite 156 der ersten leitfähigen Bahn 114 in diesem Ausführungsbeispiel frei von einer Beschichtung mit Aktivmaterial.

Zur Herstellung der Elektrodenanordnung 110 nach dem vorliegenden Ausführungsbeispiel wird hierzu die erste Seite 146 der ersten Elektrode 112 auf den Separator 116 gelegt, welcher die erste Seite 146 vollständig bedeckt, während die zweite, unbeschichtete Seite 156 der ersten Elektrode 114 oben liegt und daher frei zugänglich ist. Diese Anordnung, welche die erste leitfähige Bahn 114 und den Separator 116 umfasst, wird anschließend derart gefaltet, dass sich die unbeschichteten zweiten Seiten 156 von zwei benachbarten ersten Lagen 120, 122 direkt berühren können und die isolierende Bahn 118 oben zu liegen kommt. Auf die oben liegende isolierende Bahn 118 des Separators 116 wird nun senkrecht hierzu eine zweite Lage 128 aus der zweiten leitfähigen Bahn 130 gelegt, welche hier, ohne Beschränkung der Allgemeinheit, als Kathode eingesetzt wird, und welche, wie in Figur 2 b) dargestellt, über zwei gleichartig gestaltete Seiten 158, 160, auf welchen in durch Beschichtungslücken 150 getrennte Bereiche 148 aus entsprechendem Aktivmaterial aufgebracht sind, verfügt.

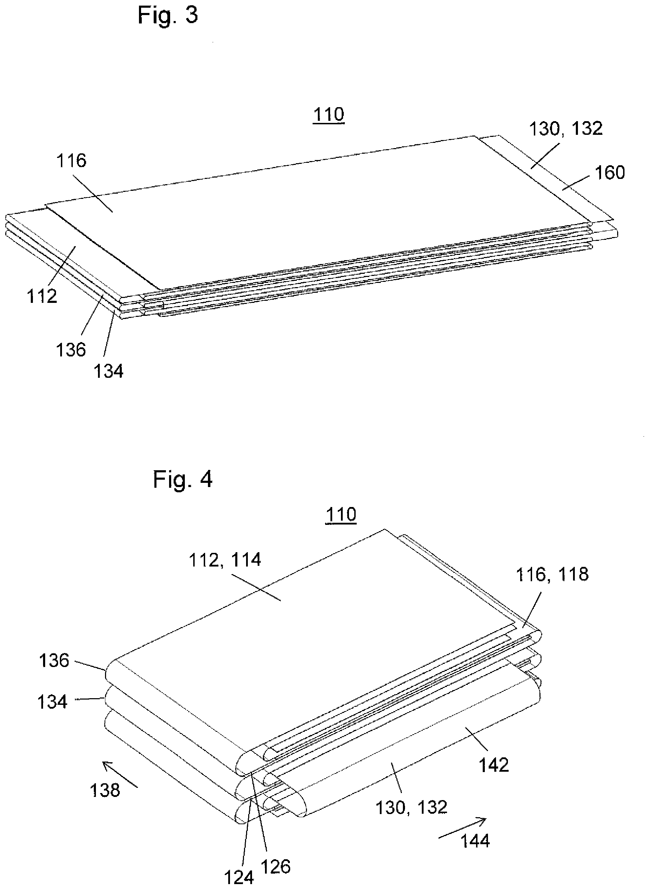

Aufgrund der in Figur 3 dargestellten Art der Kontaktierung der zweiten Elektrode 130 mit einem Ableiter genügt es hierbei, lediglich kleine Beschichtungslücken 152 vorzusehen. Die auf diese Weise auf beiden Seiten 158, 160 mit dem Aktivmaterial beschichtete Kathodenbahn 132 wird gefaltet, wodurch die Kathode 130 auf beiden Seiten 158, 160 auf eine isolierende Separatorbahn 118 trifft.

Die zusammengeführte Bahn aus der ersten leitfähigen Bahn 114 und der isolierenden Bahn 118 wird anschließend gefaltet, wodurch wiederum zwei unbeschichtete zweite Seiten 156 der Anodenbahn 114 übereinander gelegt werden und die Separatorbahn 118 wiederum oben auf dem Stapel zu liegen bekommt. Auf diese oben liegende Separatorbahn 118 wird senkrecht dazu durch Falten nun wieder die Kathodenbahn 132 gelegt.

Durch Wiederholen der beschriebenen Schritte kann der Schichtaufbau der Elektrodenanordnung 110 solange fortgesetzt werden, wie ausreichend Bahnen zur Verfügung stehen oder das Verfahren aus welchem Grund auch immer vorher abgebrochen wird. Ein erfindungsgemäßer Schichtaufbau ist beispielhaft in Figur 3 dargestellt. Während ein erster Ableiter an die ersten Faltkanten 134, 136 der ersten Elektrode 112 angebracht werden kann, steht für die Anbringung des zweiten Ableiters für die Kathode 130 der jeweils unbeschichtete Randstreifen 162 zu Verfügung, welcher der Kathodenbahn 132 seitlich einige Millimeter aus dem Dichtaufbau der Elektrodenanordung 110 herausragt. Auf diese Weise wird es, wie Figur 3 zeigt, möglich, die beiden Ableiter einander gegenüber liegend an der Elektrodenanordnung 110 anzubringen.

In diesem Ausführungsbeispiel können darüber hinaus die Rolle von Kathode und Anode vertauscht werden. Anstelle der lediglich auf der ersten Seite beschichteten Anode wird eine lediglich auf der ersten Seite beschichtete Kathode eingesetzt, während die Anode dann auf der zweite Seite eine Beschichtung, wie sie in Figur 2B für die Kathode dargestellt ist, trägt und die zweite Seite der Kathode frei von einer Beschichtung mit Aktivmaterial bleibt.

Die Figuren 4 bis 6 stellen ein zweites Ausführungsbeispiel für eine Elektrodenanordnung und eines Verfahrens zu ihrer Herstellung vor, wobei sich diese Ausführung von dem in den Figuren 1 bis 3 dargestellten Ausführungsbeispiel nur in den abschließenden Anbringungsmöglichkeiten für die Ableiter unterscheidet. Das dargestellte Verfahren zur Ausbildung des Schichtaufbaus ist dasselbe, so dass diesbezüglich auf die Beschreibung zur ersten Ausgestaltung verwiesen wird. Auch in diesem Ausführungsbeispiel ist es möglich, wie oben für das erste Ausführungsbeispiel beschrieben, die Rolle von Kathode und Anode zu vertauschen.

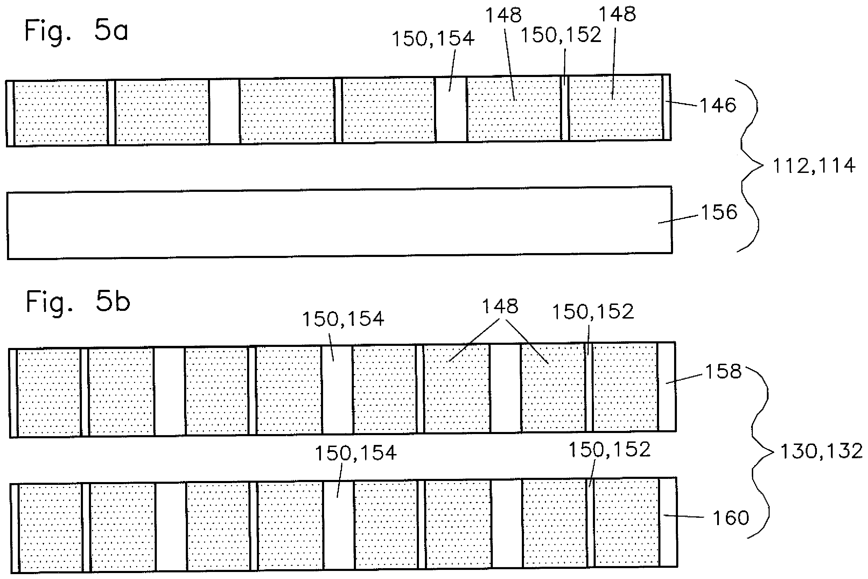

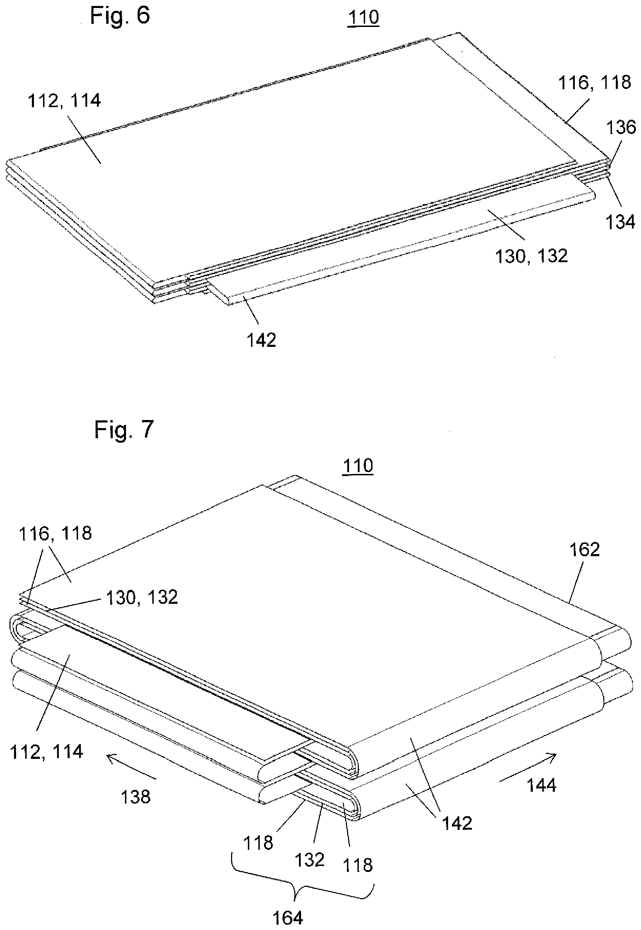

Wie insbesondere aus Figur 6 hervorgeht, stehen in diesem Ausführungsbeispiel die ersten Faltkanten 134, 136 übereinander und bilden eine Möglichkeit zur Anbringung eines ersten Ableiters aus. Senkrecht hierzu wird im Unterschied zu dem in den Figuren 1 bis 3 dargestellten Ausführungsbeispiel hier der zweite Ableiter an mindestens einer zweiten Faltkante 142 angebracht, so dass hier die beiden Ableiter senkrecht zueinander an der Elektrodenanordnung 110 angebracht sind. Wie Figur 5 zeigt, ist es hierbei jedoch vorteilhaft, wenn sowohl die erste Seite 158 als auch die zweite Seite 160 der zweiten leitfähigen Bahn 132 jeweils eine Beschichtung mit Aktivmaterial aufweist, wobei die mit dem Aktivmaterial versehenen Bereiche 148 abwechselnd durch die kleinen Beschichtungslücken 152 und die großen Beschichtungslücken 154 voneinander getrennt sind. Auch hier werden die beiden unterschiedlichen Beschichtungslücken 152, 154 zum Falten der zweiten leitfähigen Bahn 132 benötigt, wobei die großen Beschichtungslücken 154 an denjenigen Stellen vorgesehen sind, an denen später der Ableiter angebracht werden soll, was aus den oben genannten Gründen besonders vorteilhaft ist.

In Figur 7 ist schließlich ein Ausführungsbeispiel für eine erfindungsgemäße Elektrodenanordnung 110 schematisch in perspektivischer Darstellung aufgeführt. In dieser Ausführung wird eine dreilagige Bahn 164 eingesetzt, welche drei übereinander liegende Schichten aus einer isolierenden Bahn 118, einer vorzugsweise gemäß Figur 2B auf beiden Seiten 158, 160 beschichteten zweiten leitfähigen Bahn 132 und einer weiteren isolierenden Bahn 118 umfasst. Auf diese dreilagige Bahn 164 wird senkrecht die Anodenbahn 114 gelegt, wobei die auf der ersten Seite 146 der Anodenbahn 114 gemäß Figur 2 in gleicher Weise vorhandenen Bereiche 148, welche eine Beschichtung aus dem Aktivmaterial tragen, zur Separatorbahn 118 hin orientiert ist und von dieser verdeckt wird. Die einzeln geführte Anodenbahn 114 wird nun derart gefaltet, dass die unbeschichteten Seiten 156 der Anodenbahn 114 aufeinander zu liegen kommen und sich berühren. Hieraufhin wird anschließend die dreilagige Bahn 164 aus der Separatorbahn 118, der Kathodenbahn 132 und der weiteren Separatorbahn 118 gelegt, wodurch die zuvor oben liegende Anodenbahn 114 nun wiederum vollständig mit Separator 116 bedeckt ist. Auch in dieser Ausführung kann der Schichtaufbau der Elektrodenanordnung 110 durch Wiederholen der genannten Verfahrensschritte bis zu einem Abbruch fortgesetzt werden. Für die Anbringung des Ableiters an die Kathodenbahn 132 im Anschluss an die Bildung der Elektrodenanordnung 110 wird der unbeschichtete Randbereich 162 der Kathodenbahn 132, welcher seitlich einige Millimeter aus der Elektrodenanordnung 110 herausragt, eingesetzt. Auch in diesem Ausführungsbeispiel ist es möglich, wie oben bereits für das erste Ausführungsbeispiel beschrieben, die Rolle von Kathode und Anode zu vertauschen, wobei es hierzu erforderlich ist, jeweils eine, wie in Figur 2 dargestellte Beschichtung vorzunehmen.

### Bezugszeichenliste

- 110: Elektrodenanordnung
- 112: erste Elektrode (Anode)
- 114: erste leitfähige Bahn (Anodenbahn)
- 116: Separator
- 118: isolierende Bahn (Separatorbahn)
- 120: erste Lage
- 122: benachbarte erste Lage
- 124: Doppellage
- 126: weitere Doppellage
- 128: zweite Lage
- 130: zweite Elektrode (Kathode)
- 132: zweite leitfähige Bahn (Kathodenbahn)
- 134: erste Faltkante
- 136: weitere erste Faltkante
- 138: erste Faltrichtung
- 140: weitere zweite Lage
- 142: zweite Faltkante
- 144: zweite Faltrichtung
- 146: erste Seite der ersten leitfähigen Bahn
- 148: Bereiche
- 150: (Beschichtungs-)Lücken
- 152: kleine Lücke
- 154: große Lücke
- 156: zweite Seite der ersten leitfähigen Bahn
- 158: erste Seite der zweiten leitfähigen Bahn
- 160: zweite Seite der zweiten leitfähigen Bahn
- 162: Randbereich
- 164: dreilagige Bahn

## Patentansprüche

1. Elektrodenanordnung (110), umfassend einen Schichtaufbau mit mindestens einer ersten Elektrode (112), mindestens einer zweiten Elektrode (130) und mindestens einem zwischen der ersten Elektrode (112) und der zweiten Elektrode (130) eingebrachten Separator (116), wobei die erste Elektrode (112) mindestens eine erste leitfähige Bahn (114) aufweist, wobei die erste leitfähige Bahn (114) in einer ersten Zickzackfaltung gefaltet ist, wobei durch die erste Zickzackfaltung eine Mehrzahl von übereinander liegenden ersten Lagen (120, 122) ausgebildet ist, wobei einander gegenüberliegende erste Faltkanten (134, 136) der ersten Zickzackfaltung eine erste Faltrichtung (138) der ersten Zickzackfaltung definieren, wobei die zweite Elektrode (130) mindestens eine zweite leitfähige Bahn (132) aufweist, wobei die zweite leitfähige Bahn (132) in einer zweiten Zickzackfaltung gefaltet ist, wobei durch die zweite Zickzackfaltung eine Mehrzahl von übereinander liegenden zweiten Lagen (128, 140) ausgebildet ist, wobei einander gegenüberliegende zweite Faltkanten (142) der zweiten Zickzackfaltung eine zweiten Faltrichtung (144) der zweiten Zickzackfaltung definieren, wobei die ersten Lagen und (120, 122) die zweiten Lagen (142) parallel zueinander angeordnet sind, wobei die erste Faltrichtung (138) und die zweite Faltrichtung (144) einen Winkel von mindestens 60° und von höchstens 120° zueinander einnehmen, und wobei der Separator (116) in Form mindestens einer isolierenden Bahn (118) vorliegt, wobei jeweils zwei benachbarte erste Lagen (120, 122) derart übereinander liegen, dass sie jeweils eine Doppellage (124, 126) ausbilden, und zwischen zwei Doppellagen (124, 126) jeweils eine zweite Lage (128, 140) eingebracht ist, **dadurch gekennzeichnet, dass** die erste leitfähige Bahn (114) einzeln geführt ist, wobei die zweite leitfähige Bahn (132) als dreilagige Bahn (164) zwischen genau zwei der isolierenden Bahnen (118) geführt ist, mit welchen sie zusammen eine Mehrzahl von übereinander liegenden zweiten Lagen (128, 140) ausbildet, wobei die zweite leitfähige Bahn (132) eine erste Seite (158) und eine zweite Seite (160) aufweist, welche teilweise mit dem Aktivmaterial versehen sind, und über einen unbeschichteten Randstreifen (162) verfügt, wobei der unbeschichtete Randstreifen (162) seitlich aus der Elektrodenanordnung (110) herausragt.

2. Elektrodenanordnung (110) nach dem vorangehenden Anspruch, wobei die erste Seite (146) der ersten leitfähigen Bahn (114) zumindest teilweise mit dem Aktivmaterial versehen sind, während die zweite Seite (156) der ersten leitfähigen Bahn (114) nicht mit dem Aktivmaterial versehen ist.

3. Elektrodenanordnung (110) dem vorangehenden Anspruch, wobei die erste leitfähige Bahn (114) derart gefaltet ist, dass die nicht mit dem Aktivmaterial versehenen zweiten Seiten (156) der ersten leitfähigen Bahn (114) aufeinander zu liegen kommen und sich berühren.

4. Elektrodenanordnung (110) nach einem den beiden vorangehenden Ansprüche, wobei die Lücken (150) zwischen Bereichen (148) auf der ersten Seite (146) der ersten leitfähigen Bahn (114), welche mit dem Aktivmaterial versehen sind, zumindest an den ersten Faltkanten (134, 136) vorgesehen sind.

5. Elektrodenanordnung nach einem der vorangehenden Ansprüche, wobei der unbeschichtete Randstreifen (162) zur Anbringung eines Ableiters an die zweite leitfähige Bahn (132) eingerichtet ist.

6. Verfahren zur Herstellung einer Elektrodenanordnung (110), umfassend einen Schichtaufbau mit mindestens einer ersten Elektrode (112) und mindestens einer zweiten Elektrode (130) sowie mindestens einem zwischen der ersten Elektrode (112) und der zweiten Elektrode (130) eingebrachten Separator (116), mit den Schritten:
a) Bereitstellen einer ersten Elektrode (112) in Form einer ersten leitfähigen Bahn (114);
b) Bereitstellen einer zweiten Elektrode (130) in Form einer zweiten leitfähigen Bahn (132), wobei die zweite leitfähige Bahn (132) eine erste Seite (158) und eine zweite Seite (160) aufweist, welche teilweise mit dem Aktivmaterial versehen sind, und über einen unbeschichteten Randstreifen (162) verfügt;
c) Falten der ersten leitfähigen Bahn (114) zu einer ersten Lage (120, 122), wobei die erste leitfähige Bahn (114) einzeln geführt wird;
d) Falten der zweiten leitfähigen Bahn (132) zu einer zweiten Lage (128, 140), wobei die zweite leitfähige Bahn (132) als dreilagige Bahn (164) zwischen genau zwei der isolierenden Bahnen (118) geführt ist, mit welchen sie zusammen eine Mehrzahl von übereinander liegenden zweiten Lagen (128, 140) ausbildet, wobei der unbeschichtete Randstreifen (162) seitlich aus der Elektrodenanordnung (110) herausragt;
wobei die Schritte c) und d) mehrfach derart wiederholt werden, so dass sich eine Mehrzahl von übereinander liegenden ersten Lagen (120, 122) in Form einer ersten Zickzackfaltung, wobei einander gegenüberliegende erste Faltkanten (134) der ersten Zickzackfaltung eine erste Faltrichtung (138) der ersten Zickzackfaltung definieren, und sich eine Mehrzahl von übereinander liegenden zweiten Lagen (128, 140) in Form einer zweiten Zickzackfaltung, wobei einander gegenüberliegende zweite Faltkanten (142) der zweiten Zickzackfaltung eine zweite Faltrichtung (144) der zweiten Zickzackfaltung definieren, ausbilden, wobei die ersten Lagen (120, 122) und die zweiten Lagen (128, 140) parallel zueinander angeordnet werden, wobei die erste Faltrichtung (138) und die zweite Faltrichtung (144) einen Winkel von mindestens 60° und von höchstens 120° zueinander einnehmen, wobei jeweils zwei benachbarte erste Lagen (120, 122) derart übereinander gelegt werden, dass sie jeweils eine Doppellage (124, 126) ausbilden, und zwischen zwei Doppellagen (124, 126) jeweils eine zweite Lage (132) eingebracht wird, und wobei der Separator (116) in Form mindestens einer isolierenden Bahn (118) bereitgestellt wird, welche derart zwischen die erste leitfähige Bahn (114) und die zweite leitfähige Bahn (132) eingebracht wird, dass der Separator (116) die erste leitfähige Bahn (114) von der zweiten leitfähigen Bahn (132) trennt.

7. Verfahren nach dem vorangehenden Anspruch, wobei die erste Seite (146) der ersten leitfähigen Bahn (114) zumindest teilweise mit dem Aktivmaterial versehen ist, während die zweite Seite (156) der ersten leitfähigen Bahn (114) nicht mit dem Aktivmaterial versehen ist.

8. Verfahren dem vorangehenden Anspruch, wobei die erste leitfähige Bahn (114) derart gefaltet wird, dass die nicht mit dem Aktivmaterial versehenen zweiten Seiten (156) der ersten leitfähigen Bahn (114) aufeinander zu liegen kommen und sich berühren.

9. Elektrochemische Zelle, umfassend mindestens eine Elektrodenanordnung (110) gemäß einem der Ansprüche betreffend die Elektrodenanordnung (110), mindestens einen Elektrolyten, mindestens einen ersten Ableiter für die erste Elektrode (112) und mindestens einen zweiten Ableiter für die zweite Elektrode (130).

10. Elektrochemische Zelle nach dem vorangehenden Anspruch, wobei der erste Ableiter und/oder der zweite Ableiter an Lücken (150) zwischen Bereichen, die mit einem Aktivmaterial versehen sind, angebracht sind.

11. Elektrochemische Zelle nach einem der beiden vorangehenden Ansprüche, wobei der erste Ableiter an einer ersten Faltkante (134, 136) der ersten leitfähigen Bahn (114) und der zweite Ableiter in einem Randbereich (122) der zweiten leitfähigen Bahn (132) angebracht sind.

12. Elektrochemische Zelle nach einem der drei vorangehenden Ansprüche, wobei der erste Ableiter und der zweite Ableiter einander gegenüber liegend an der Elektrodenanordnung (110) angebracht sind.

13. Elektrochemische Zelle nach einem der vier vorangehenden Ansprüche, wobei der Separator (116) zumindest teilweise mit dem Elektrolyt getränkt ist oder der Elektrolyt in flüssiger Form in ein Gehäuse eingebracht ist, welches die elektrochemische Zelle zumindest teilweise umgibt.

14. Sekundärbatterie, umfassend mindestens eine elektrochemische Zelle gemäß einer der Ansprüche betreffend die elektrochemische Zelle.

## Claims

1. Electrode assembly (110), comprising a layer structure with at least one first electrode (112), at least one second electrode (130) and at least one separator (116) inserted between the first electrode (112) and the second electrode (130), the first electrode (112) having at least one first conductive band (114), the first conductive band (114) being folded in a first zigzag fold, the first zigzag fold having the effect of forming a plurality of first layers (120, 122) lying one over the other, wherein first folding edges (134, 136) lying opposite one another of the first zigzag fold define a first folding direction (138) of the first zigzag fold, the second electrode (130) having at least one second conductive band (132), the second conductive band (132) being folded in a second zigzag fold, the second zigzag fold having the effect of forming a plurality of second layers (128, 140) lying one over the other, wherein second folding edges (142) lying opposite one another of the second zigzag fold define a second folding direction (144) of the second zigzag fold, the first layers (120, 122) and the second layers (142) being arranged parallel to one another, the first folding direction (138) and the second folding direction (144) forming an angle in relation to one another of at least 60° and of at most 120°, and the separator (116) taking the form of at least one insulating band (118), two neighboring first layers (120, 122) respectively lying one over the other in such a way that they in each case form a double layer (124, 126), and a second layer (128, 140) being respectively inserted between two double layers (124, 126), **characterized in that** the first conductive band (114) is guided individually, the second conductive band (132) is guided as a three-layer band (164) between exactly two of the insulating bands (118), with which it together forms a plurality of second layers (128, 140) lying one over the other, the second conductive band (132) having a first side (158) and a second side (160) that are partially provided with the active material and having an uncoated peripheral strip (162), the uncoated peripheral strip (162) laterally protruding out from the electrode assembly (110).

2. Electrode assembly (110) according to the preceding claim, the first side (146) of the first conductive band (114) being at least partially provided with the active material, while the second side (156) of the first conductive band (114) is not provided with the active material.

3. Electrode assembly (110) according to the preceding claim, the first conductive band (114) being folded in such a way that the second sides (156) of the first conductive band (114) that are not provided with the active material come to lie on one another and touch.

4. Electrode assembly (110) according to one of the two preceding claims, wherein gaps (150) are provided between regions (148) on the first side (146) of the first conductive band (114) that are provided with the active material, at least at the first folding edges (134, 136).

5. Electrode assembly according to one of the preceding claims, the uncoated peripheral strip (162) being configured for attaching a current collector to the second conductive band (132).

6. Method for producing an electrode assembly (110), comprising a layer structure with at least one first electrode (112) and at least one second electrode (130) and also at least one separator (116) inserted between the first electrode (112) and the second electrode (130), with the steps of:
a) providing a first electrode (112) in the form of a first conductive band (114);
b) providing a second electrode (130) in the form of a second conductive band (132), the second conductive band (132) having a first side (158) and a second side (160) that are partially provided with the active material, and having an uncoated peripheral strip (162);
c) folding the first conductive band (114) to form a first layer (120, 122), the first conductive band (114) being guided individually;
d) folding the second conductive band (132) to form a second layer (128, 140), the second conductive band (132) being gided as a three-layer band (164) between exactly two of the insulating band (118), with which it together forms a plurality of second layers (128, 140) lying one over the other, the uncoated peripheral strip (162) laterally protruding out from the electrode assembly (110);
wherein steps c) and d) are being repeated a number of times in such a way that there form a plurality of first layers (120, 122) lying one over the other in the form of a first zigzag fold, wherein first folding edges (134) lying opposite one another of the first zigzag fold define a first folding direction (138) of the first zigzag fold, and that a plurality of second layers (128, 140) lying one over the other in the form of a second zigzag fold, wherein second folding edges (142) lying opposite one another of the second zigzag fold define a second folding direction (144) of the second zigzag fold, the first layers (120, 122) and the second layers (128, 140) being arranged parallel to one another, the first folding direction (138) and the second folding direction (144) forming an angle in relation to one another of at least 60° and of at most 120°, two neighboring first layers (120, 122) respectively being laid one over the other in such a way that they in each case form a double layer (124, 126), and a second layer (132) being respectively inserted between two double layers (124, 126), and the separator (116) being provided in the form of at least one insulating band (118), which is inserted between the first conductive band (114) and the second conductive band (132) in such a way that the separator (116) separates the first conductive band (114) from the second conductive band (132).

7. Method according to the preceding claim, the first side (146) of the first conductive band (114) being at least partially provided with the active material, while the second side (156) of the first conductive band (114) is not provided with the active material.

8. Method according to the preceding claim, the first conductive band (114) being folded in such a way that the second sides (156) of the first conductive band (114) that are not provided with the active material come to lie on one another and touch.

9. Electrochemical cell, comprising at least one electrode assembly (110) according to one of the claims concerning the electrode assembly (110), at least one electrolyte, at least one first current collector for the first electrode (112) and at least one second current collector for the second electrode (130).

10. Electrochemical cell according to the preceding claim, the first current collector and/or the second current collector being attached at gaps (150) between regions which are provided with an active material.

11. Electrochemical cell according to one of the two preceding claims, the first current collector being attached at a first folding edge (134, 136) of the first conductive band (114) and the second current collector being attached in a peripheral region (122) of the second conductive band (132).

12. Electrochemical cell according to one of the three preceding claims, the first current collector and the second current collector being attached lying opposite one another on the electrode assembly (110) .

13. Electrochemical cell according to one of the four preceding claims, the separator (116) being at least partially impregnated with the electrolyte or the electrolyte having been introduced in a liquid form into a housing which at least partially surrounds the electrochemical cell.

14. Secondary battery, comprising at least one electrochemical cell according to one of the claims concerning the electrochemical cell.

## Revendications

1. Ensemble d'électrodes (110), comprenant une structure stratifiée pourvue d'au moins une première électrode (112), d'au moins une deuxième électrode (130) et d'au moins un séparateur (116) intégré entre la première électrode (112) et la deuxième électrode (130), la première électrode (112) comportant au moins une première piste conductive (114), la première piste conductive (114) étant pliée en un premier pliage en zigzag, par le premier pliage en zigzag étant conçue une pluralité de premières couches (120, 122) superposées, des premières arêtes de plis (134, 136) réciproquement opposées du premier pliage en zigzag définissant une première direction de pliage (138) du premier pliage en zigzag, la deuxième électrode (130) comportant au moins une deuxième piste conductive (132), la deuxième piste conductive (132) étant pliée en un deuxième pliage en zigzag, par le deuxième pliage en zigzag étant conçue une pluralité de deuxièmes couches (128, 140) superposées, des deuxièmes arêtes de plis (142) réciproquement opposées du deuxième pliage en zigzag définissant une deuxième direction de pliage (144) du deuxième pliage en zigzag, les premières couches (120, 122) et les deuxièmes couches (142) étant placées à la parallèle les unes des autres, la première direction de pliage (138) et la deuxième direction de pliage (144) adoptant entre elles un angle d'au moins 60° et d'au plus 120° et le séparateur (116) se présentant sous la forme d'au moins une piste isolante (118), chaque fois deux premières couches (120, 122) voisines étant superposées de telle sorte qu'elles forment chaque fois une double couche (124, 126) et qu'entre deux doubles couches (124, 126) soit chaque fois intégrée une deuxième couche (128, 140), **caractérisé en ce que** la première piste conductive (114) est guidée individuellement, la deuxième piste conductive (132) étant guidée en tant que piste tri-couches (164) entre précisément deux des pistes isolantes (118) avec lesquelles elle forme en commun une pluralité de deuxièmes couches (128, 140) superposées, la deuxième piste conductive (132) présentant une première face (158) et une deuxième face (160) lesquelles sont munies partiellement de la matière active et disposant d'un ruban marginal (162) non revêtu, le ruban marginal (162) non revêtu saillant latéralement hors de l'ensemble d'électrodes (110).

2. Ensemble d'électrodes (110) selon la revendication précédente, la première face (146) de la première piste conductive (114) étant munie au moins partiellement de la matière active, alors que la deuxième face (156) de la première piste conductive (114) n'est pas munie de la matière active.

3. Ensemble d'électrodes (110) selon la revendication précédente, la première piste conductive (114) étant pliée de telle sorte que les deuxièmes faces (156) de la première piste conductive (114) non munies de la matière active viennent se superposer et entrent en contact mutuel.

4. Ensemble d'électrodes (110) selon l'une quelconque des deux revendications précédentes, des vides (150) entre des zones (148) sur la première face (146) de la première piste conductive (114), lesquelles sont munies de la matière active, sont prévues au moins sur les premières arêtes de pliage (134, 136).

5. Ensemble d'électrodes selon l'une quelconque des revendications précédentes, le ruban marginal (162) non revêtu étant aménagé pour le montage d'un collecteur sur la deuxième piste conductive (132) .

6. Procédé, destiné à la fabrication d'un ensemble d'électrodes (110), comprenant une structure stratifiée pourvue d'au moins une première électrode (112) et d'au moins une deuxième électrode (130), ainsi que d'au moins un séparateur (116) intégré entre la première électrode (112) et la deuxième électrode (130), comportant les étapes consistant à :
a) mettre à disposition une première électrode (112), sous la forme d'une première piste conductive (114) ;
b) mettre à disposition une deuxième électrode (130), sous la forme d'une deuxième piste conductive (132), la deuxième piste conductive (132) comportant une première face (158) et une deuxième face (160), lesquelles sont munies partiellement de la matière active et qui disposent d'un ruban marginal (162) non revêtu ;
c) plier la première piste conductive (114) en une première couche (120, 122), la première piste conductive (114) étant guidée individuellement ;
d) plier la deuxième piste conductive (132) en une deuxième couche (128, 140), la deuxième piste conductive (132) étant guidée en tant que piste tri-couches (164) entre précisément deux des pistes isolantes (118) avec lesquelles elle forme en commun une pluralité de deuxièmes couches (128, 140) superposées, le ruban marginal (162) non revêtu saillant latéralement hors de l'ensemble d'électrodes (110) ;
les étapes c) et d) étant réitérées plusieurs fois, de telle sorte que se créé une pluralité de premières couches (120, 122) sous la forme d'un premier pliage en zigzag, des premières arêtes de plis (134) opposées du premier pliage en zigzag définissant une première direction de pliage (138) du premier pliage en zigzag, et une pluralité de deuxièmes couches (128, 140) superposées sous la forme d'un deuxième pliage en zigzag, des deuxièmes arêtes de plis (142) du deuxième pliage en zigzag définissant une deuxième direction de pliage (144) du deuxième pliage en zigzag, les premières couches (120, 122) et les deuxièmes couches (128, 140) étant placées en parallèle l'une de l'autre, la première direction de pliage (138) et la deuxième direction de pliage (144) adoptant un angle mutuel d'au moins 60° et d'au plus 120°, chaque fois deux premières couches (120, 122) voisines étant superposées de sorte à former chaque fois une double couche (124, 126) et entre deux doubles couches (124, 126) étant insérée chaque fois une deuxième couche (132) et le séparateur (116) étant mis à disposition sous la forme d'au moins une piste isolante (118), laquelle est insérée entre la première piste conductive (114) et la deuxième piste conductive (132), de telle sorte que le séparateur (116) sépare la première piste conductive (114) de la deuxième piste conductive (132).

7. Procédé selon la revendication précédente, la première face (146) de la première piste conductive (114) étant munie au moins partiellement de la matière active, alors que la deuxième face (156) de la première piste conductive (114) n'est pas munie de la matière active.

8. Procédé selon la revendication précédente, la première piste conductive (114) étant conçue de telle sorte que les deuxième faces (156) non munies de la matière active de la première piste conductive (114) viennent se superposer en entrant en contact mutuel.

9. Cellule électrochimique, comprenant au moins un ensemble d'électrodes (110) selon l'une quelconque des revendications concernant l'ensemble d'électrodes (110), au moins un électrolyte, au moins un premier collecteur pour la première électrode (112) et au moins un deuxième collecteur pour la deuxième électrode (130).

10. Cellule électrochimique selon la revendication précédente, sur des vides (150) entre des zones qui sont munies de matière active, le premier collecteur et/ou le deuxième collecteur étant munies d'une matière active.

11. Cellule électrochimique selon l'une quelconque des deux revendications précédentes, le premier collecteur étant monté sur une première arête de pliage (134, 136) de la première piste conductive (114) et le deuxième collecteur étant monté dans une zone marginale (122) de la deuxième piste conductive (132).

12. Cellule électrochimique selon l'une quelconque des trois revendications précédentes, le premier collecteur et le deuxième collecteur étant montés en vis-à-vis sur l'ensemble d'électrodes (110).

13. Cellule électrochimique selon l'une quelconque des quatre revendications précédentes, le séparateur (116) étant imbibé au moins en partie de l'électrolyte ou l'électrolyte étant introduit sous forme liquide dans un boîtier, lequel entoure au moins en partie la cellule électrochimique.

14. Batterie secondaire, comprenant au moins une cellule électrochimique selon l'une quelconque des revendications concernant la cellule électrochimique.
